Europäisches Patentamt

European Patent Office

Office européen des brevets

(19)

(11) Publication number: **0 042 677**

**A1**

(12) **EUROPEAN PATENT APPLICATION**

(21) Application number: **81302420.5**

(22) Date of filing: **02.06.81**

(51) Int. Cl.³: **F 16 H 47/06**

(30) Priority: **24.06.80 GB 8020706**

(43) Date of publication of application:
**30.12.81 Bulletin 81/52**

(84) Designated Contracting States:
**AT BE DE FR GB IT NL SE**

(71) Applicant: **AUTOMOTIVE PRODUCTS LIMITED**
**Tachbrook Road**
**Leamington Spa Warwickshire CV31 3ER(GB)**

(72) Inventor: **Webster, Henry George**
**The Old School House Barrowfield Lane**
**Kenilworth Warwickshire(GB)**

(72) Inventor: **Parsons, David**
**73 John O'Gaunt Road**
**Kenilworth Warwickshire(GB)**

(54) **Rotary transmission.**

(57) A rotary power transmission has a set of gear trains (A-D) providing a series of increasing speed ratios and two clutches (17,18) independently operable to provide alternative drive paths through the gear trains between an input (11) and an output (19), the clutches are alternately engageable to drive sequential ratios of the set. A fluid coupling (12) is provided to drive the transmission at one side of the set of gear trains and a drive member (14) for the clutches (17,18) at the other side of the set. A third clutch (16) can be provided to directly connect the input shaft (11) and drive member (14).

EP 0 042 677 A1

This invention relates to a rotary power transmission of the dual clutch kind by which is meant a transmission having gear trains, each being one of a set providing a series of increasing speed ratios, and two clutches independently operable and providing alternative drive paths through the gear trains between a common input and a common output, the gear trains of alternate speed ratios in the set being driven respectively through one and the other clutch.

The invention is particularly though not exclusively applicable to drive transmissions for motor vehicles.

Transmissions of the dual clutch kind are derived from conventional single clutch manual-change transmissions with which they can share many component parts.

Examples of transmissions of the dual clutch kind are shown in British Patent Specification Nos. 145,827 (Bramley-Moore), 585,716 (Kegresse), 795,260 (David Brown) and 1,125,267 (Bosch). To the best of our knowledge, none of these prior proposals have been commercially adopted.

-2-

One difficulty with transmissions of the dual clutch kind is in achieving satisfactory clutch control under all conditions of intended use. Two kinds of clutch control are required, clutch engagement for drive take-up from rest and clutch engagement for speed ratio changes involving a change of drive from one clutch to the other.

An experienced vehicle driver can sense the engine speed and rate of clutch engagement to achieve satisfactory drive take-up from rest. It has proved extremely difficult to provide a control mechanism which will faultlessly perform this function for all vehicle loads, road conditions and road gradients. Moreover an experienced driver can often cope with a malfunctioning clutch whereas a control mechanism may aggravate the symptoms of, for example, a slipping clutch driven plate.

Dynamic ratio changes from one clutch to another pose special problems of timing the rate of clutch engagement and disengagement to ensure that a smooth ratio change is effected without loss of drive or simultaneous drive through two ratios at once.

It is known to include a fluid coupling in the input shaft of a transmission. Although this can solve the problem of drive take-up from rest it cannot alleviate the problems of a dynamic ratio change since all transmission speed ratios are driven through the coupling. A disadvantage of fluid couplings is that they are inefficient in use since the turbine always slips relatively to the impeller. It is possible to include a lock-up clutch to couple the turbine and impeller together at small speed differentials. Such clutches are normally part of the fluid coupling to which they can add considerable complication and extra cost.

The present invention provides a transmission of the dual clutch kind with fluid coupling and which has the dual clutches in a particularly convenient position.

According to the invention there is provided a rotary power transmission having gear trains, each being one of a set providing a series of increasing speed ratios, and two clutches independently operable and providing alternative drive paths through the gear trains between a common input and a common output, the gear trains of alternate speed ratios in the set being driven respectively through one and the other clutch, characterised thereby that said input is connected to the impeller of a fluid coupling, the turbine of the coupling being connected to a drive member having co-axial drive faces, one for each of said clutches, said fluid coupling being at one side of the set of gear trains and said drive member being at the opposite side.

The clutches are conveniently placed for service replacement and enable a standard unmodified torque converter to be utilised.

Preferably said drive member has a further co-axial drive face for a lock-up clutch.

This arrangement conveniently provides a
clutch
lock-up/which again is easily serviced and allows a standard torque converter to be utilised.

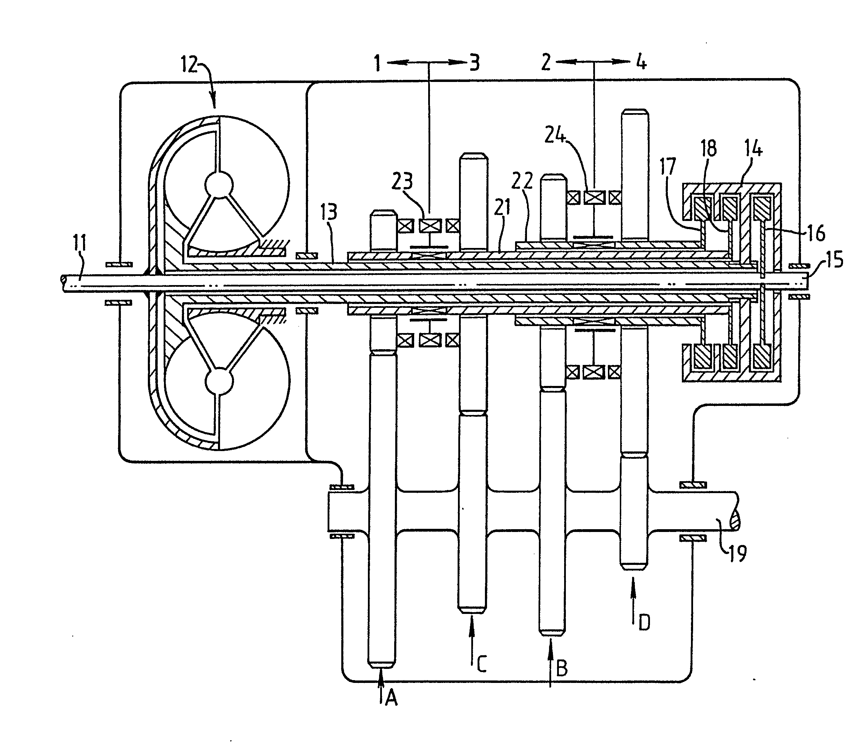

Other features of the invention are included in the following description of a preferred embodiment shown, by way of example only, in the accompanying drawing which is a somewhat schematic illustration of a four speed transmission including fluid coupling and lock-up clutch according to the invention and suitable for a motor vehicle.

In the case where a lock-up clutch is not required its drive shaft and clutch components may be deleted from the transmission assembly.

With reference to the drawing there is shown an input drive shaft 11 from an engine (not shown) to the impeller of a conventional torque converter 12. The turbine of the torque converter is coupled through an intermediate drive shaft 13 to a friction clutch housing 14. A drive shaft 15, being an extension of the input shaft 11, couples the engine, and hence input shaft 11, to a friction clutch 16 which is selectively engageable with the clutch housing 14 to provide direct drive from the engine, so by passing the torque converter 12.

Friction clutches 17 and 18 are engageable with the clutch housing 14 to drive an output shaft 19 through two wheel gear trains A-D which provide four stepped speed ratios.

First and third speed gear sets, respectively A and C, are driven from friction clutch 18 by shaft 21; second and fourth speed gear sets, respectively B and D, are driven from friction clutch 17 by shaft 22. The gear sets are connectable to their respective driving shafts by synchromesh assemblies 23,24. Such assemblies are well known in transmission art and will not be further described here.

It is intended that automatic speed ratio selection would be effected using known automatic transmission control technology, however, the particular method of automatic control is not important to the present invention.

Operation of the transmission is as follows :-

The vehicle engine is running, all clutches 16,17,18 are disengaged.

First speed ratio is selected by shifting synchroniser assembly 23 to couple gear set A to the driving shaft 21. Clutch 18 is engaged and on acceleration of the vehicle engine, driving torque is transmitted through the torque converter 12 to the clutch housing 14, gear set A, and hence the output shaft 19. Thus the torque converter provides drive take up from rest.

As vehicle speed increases clutch 16 may be engaged to provided direct drive to the clutch housing 14, so eliminating fluid losses in the torque converter 12. This arrangement gives maximum fuel economy.

A speed ratio change from 1st to 2nd is initiated by the transmission system control in response to the usual control parameters such as engine torque demand and road speed.

Second speed ratio is selected by shifting synchroniser assembly 24 to couple gear set B to the driving shaft 19. Consequently second gear drive train of friction clutch 17 and driving shaft 22 is driven idly by the output shaft 19.

In order to reduce the speed differential across the synchroniser assembly 24 prior to preselection of second speed ratio, clutch 17 may be momentarily engaged to raise the speed of driving shaft 22 to engine speed.

The speed ratio change from 1st to 2nd speed is completed by disengagement of clutch 16, drive being maintained through the torque converter 12, and simultaneous engagement of clutch 17 with disengagement of clutch 18. Thus a ratio change is completed with driving torque being progressively transferred from first gear drive train to second gear drive train. Clutch 16 is now re-engaged to provide direct drive.

First gear drive train is now driven idly by the output shaft 19, and synchroniser assembly 23 may be shifted to disengage first speed ratio. Dependent on the valves of the control mechanism parameters the synchroniser assembly will subsequently be shifted to pre-select 3rd speed ratio in preparation for an up change or re-select 1st speed ratio in preparation for a down change.

Thus the control mechanism pre-selects the required next sequential speed ratio, the gear shift being made at the appropriate moment by changing drive from one of the clutches 17,18 to the other.

Reverse speed may be provided by an additional gear train in any known manner.

The arrangement described has the particular advantage of including the torque converter in the drive train for drive take-up from rest and to provide some resilience in the transmission during a ratio change whilst allowing for direct drive at all other times.

Claims

1.      A rotary power transmission having gear trains (A-D), each being one of a set providing a series of increasing speed ratios, and two clutches (17,18) independently operable and providing alternative drive paths through the gear trains between a common input (11) and a common output (19), the gear trains of alternate speed ratios in the set being driven respectively through one and the other clutch, characterised thereby that said input (11) is connected to the impeller of a fluid coupling (12), the turbine of the coupling being connected to a drive member (14) having co-axial drive faces, one for each of said clutches (17,18), said fluid coupling (12) being at one side of the set of gear trains and said drive member (14) being at the opposite side.

2.      A rotary transmission according to Claim 1, characterised thereby that a third clutch (16) is provided between said input member (11) and a further co-axial drive face of said drive member (14).

3. A rotary transmission according to Claim 2, characterised thereby that the drive face for said third clutch (16) is the outermost drive face of said drive member (14) with respect to the set of gear trains.

0042677

**0042677**

# European Patent Office

## EUROPEAN SEARCH REPORT

Application number

EP 81 30 24 20

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | US - A - 3 397 596 (LUBINSKI)<br>* column 3; figure 4 * | 1 | F 16 H 47/06 |
| | FR - A - 1 478 278 (Z.F.)<br>* pages 1 and 2; figure 1 * | 1, 2 | |
| | DE - B - 1 089 279 (BOMMEL)<br>* column 2,3; figures * | 1 | |
| | | | **TECHNICAL FIELDS SEARCHED (Int. Cl.³)** |
| A | FR - A - 1 465 046 (MAYBACH) | 1 | F 16 H 47/00<br>3/00 |
| A | GB - A - 707 259 (KREIS) | 1 | |
| D | GB - A - 795 260 (BROWN) | 1 | |
| D | GB - A - 585 716 (KEGRESSE) | 1 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 29-09-1981 | FLORES |

EPO Form 1503.1   06.78